# FASCICULE DE BREVET EUROPEEN

(11) **EP 3 818 257 B1**
(45) Date de publication et mention de la délivrance du brevet: **04.01.2023**
(21) Numéro de dépôt: 19742883.2
(22) Date de dépôt: 05.07.2019
(51) Int. Cl.: F01M 11/08, F01D 25/18, B01D 45/14

(54) **DÉGAZEUR CENTRIFUGE MONOBLOC**
INTEGRIERTER ZENTRIFUGALENTGASER
INTEGRAL CENTRIFUGAL DEGASSER

(30) Priorité: 05.07.2018 FR 1856182
(43) Date de publication de la demande: 12.05.2021
(73) Titulaire: Safran Helicopter Engines, 64510 Bordes (FR)
(72) Inventeur: NIFENECKER, Arnaud, 77550 Moissy-Cramayel (FR); BONNET, Frédéric, 77550 Moissy-Cramayel (FR); GAYMU, Pierre, 77550 Moissy-Cramayel (FR); LANQUETIN, Rémi, 77550 Moissy-Cramayel (FR); FULLERINGER, Benjamin, 77550 Moissy-Cramayel (FR)
(74) Mandataire: Gevers & Orès
(86) Numéro de dépôt international: PCT/FR2019/051667
(87) Numéro de publication internationale: WO 2020/008153

(56) Documents cités:
- EP-A1- 0 626 503
- EP-A1- 3 011 156
- EP-B1- 0 626 503
- EP-B1- 3 011 156
- US-A- 6 033 450
- US-A1- 2004 098 956
- US-A1- 2005 211 093
- US-A1- 2017 218 848

## Description

### Domaine technique de l'invention

L'invention concerne un dégazeur centrifuge de turbomachine.

### Arrière-plan technologique

L'art antérieur comprend les documents suivants: US-A1-2004/098956, US-A1-2005/211093, EP-A1-0 626 503, US-A1-2017/218848, EP-A1 - 3 011 156 A1, et US-A-6 033 450.

Les turbomachines sont des systèmes complexes qui mettent en œuvre un certain nombre d'ensembles tournants (turbines, compresseur, etc.) qui doivent être équipés de dispositifs d'étanchéité. Ces dispositifs d'étanchéité sont en général réalisés par des labyrinthes d'air pressurisés aménagés au voisinage des ensembles tournants. Pour ce faire, de l'air est prélevé directement dans la veine d'air de la turbomachine. Cet air transite ensuite dans la turbomachine par les différents labyrinthes prévus à cet effet, puis est évacué vers l'extérieur de la turbomachine pour limiter la montée en pression des autres zones de la turbomachine, notamment le réducteur, la boite d'accessoires, etc.

Or, cet air ayant transité par différentes zones de la turbomachine, il est chargé en huile utilisée pour le refroidissement et la lubrification des paliers et des pignons des ensembles tournants. Pour éviter le rejet d'air chargé d'huile, atténuer l'impact écologique des turbomachines, réduire la consommation d'huile et limiter les opérations de remplissage des réserves d'huile, il est important de prévoir des dégazeurs qui permettent de séparer l'huile de l'air avant d'évacuer l'air vers l'extérieur de la turbomachine.

Un tel dégazeur est en général agencé et entrainé par une prise de puissance mécanique au niveau de la boite d'accessoires ou du réducteur de la turbomachine.

De manière connue, un tel dégazeur centrifuge comprend une ou plusieurs enceinte(s) de séparation centrifuge du mélange air/huile agencée(s) formant veine(s) de circulation d'air, agencée autour d'un arbre creux et délimitée(s) par une paroi annulaire externe et une paroi annulaire interne. Le dégazeur comprend en outre une entrée axiale d'alimentation de l'enceinte avec le mélange air/huile, au moins une sortie radiale externe d'huile périphérique ménagée dans la paroi externe et une sortie radiale interne d'air déshuilé, ménagée dans la paroi annulaire interne ou entre les parois annulaires interne et externe. Ainsi, lors de la mise en rotation du dégazeur, obtenue classiquement par l'intermédiaire d'un pignon de la boite d'accessoires ou du réducteur, l'huile est naturellement entrainée par force centrifuge vers la ou les sortie(s) d'huile ménagée(s) en périphérie du dégazeur et l'air déshuilé est évacué, via l'arbre creux, vers l'extérieur du dégazeur.

Cependant, les performances des dégazeurs connus sont en général handicapées par des pertes de charge internes qui sont dues :
- en particulier à la forme de la veine de l'enceinte de centrifugation, empruntée par le flux d'air en cours de déshuilage, et
- à la présence d'une mousse métallique dans la veine de l'enceinte.

La mousse métallique remplit un rôle de filtrage et sert à retenir l'huile non évacuée par centrifugation, permettant une optimisation du nettoyage de l'air mais générant, comme mentionné ci-dessus des pertes de charge.

Par ailleurs, le dégazeur étant rapporté sur le pignon qui l'entraîne, la liaison nécessaire du dégazeur sur le pignon implique l'utilisation d'un écrou qui ajoute de la masse à l'ensemble et, de plus, considérer deux pièces distinctes empêche de penser une optimisation en terme de masse globale.

Afin d'assurer la continuité de la veine d'air, des ouvertures ou lumières doivent être ménagées dans le disque du pignon et des systèmes anti-rotation doivent également être ajoutés à l'ensemble formé par le pignon et le dégazeur afin d'assurer une indexation satisfaisante du dégazeur sur le pignon. Dans l'état de la technique, la liaison entre le dégazeur et le pignon ne permet pas d'optimiser totalement la veine d'air et il subsiste des discontinuités, générant des pertes de charge. L'intégration du dégazeur sur le pignon ne permet donc pas une liberté de travail maximale sur les sections de passage de l'air et les vitesses de transit du mélange air/huile dans le dégazeur ne peuvent pas être minimisées.

En ce qui concerne les formes de la veine, le procédé de fabrication peut alors être limitant quant au potentiel de géométrie optimale à réaliser.

A titre d'exemple, la fonderie permet la génération de formes complexes, limitant les pertes de charge, mais rend l'intégration de mousses métalliques complexes ou en dégradent le gain. Selon un autre exemple, l'usinage conventionnel permet d'intégrer des mousses métalliques mais limite les libertés dans la génération de formes de veine d'air et multiplie le nombre de références de pièces.

En ce qui concerne la présence de mousse métallique, les pertes de charge sont dues au fait qu'à haute vitesse (par exemple pour des vitesses de l'ordre de 6000 tours/min), la surface frontale constituée par la mousse métallique agit comme un mur et le degré de pénétration des particules d'air dans la mousse est faible. Les procédés de fabrication connus, intégrant par exemple une mousse déterminée, ne permettent pas le pilotage de la géométrie de la structure.

Il est difficile de trouver une solution couplant les attentes technologiques et les moyens de production compatibles avec les deux aspects que sont la minimisation des pertes de charge et l'optimisation de la capacité de déshuilage.

Il existe donc un besoin de concevoir un dégazeur avec un procédé de fabrication permettant à la fois, d'obtenir un taux de captage de gouttelettes d'huile efficace, d'avoir un certain de degré de liberté quant aux géométries choisies pour faire circuler le flux d'air en cours de déshuilage, de limiter les pertes de charge, notamment dues aux discontinuités de la veine de circulation du mélange air/huile, et de minimiser la masse de l'ensemble.

### Objectifs de l'invention

L'invention vise à fournir une conception de dégazeur répondant au besoin précité pour obtenir un dégazeur centrifuge de turbomachine qui présente des performances améliorées par rapport aux dégazeurs connus.

### Exposé de l'invention

A cet effet, l'invention a pour objet un dégazeur centrifuge d'un mélange air/huile de turbomachine, comprenant un arbre creux s'étendant le long d'un axe X et définissant une cavité interne de circulation d'air, un pignon de mise en rotation de l'arbre creux, et une enceinte annulaire de séparation centrifuge dudit mélange, l'enceinte étant agencée autour de l'arbre creux et formant une veine de passage de fluide dont une entrée est orientée axialement pour l'alimentation de l'enceinte avec ledit mélange, et dont une première sortie est orientée radialement vers l'intérieur pour la sortie de l'air déshuilé séparé dudit mélange, cette première sortie étant en communication fluidique avec ladite cavité interne de l'arbre creux pour l'évacuation de l'air déshuilé vers l'extérieur du dégazeur, l'enceinte comportant en outre au moins une seconde sortie d'huile orientée radialement vers l'extérieur et destinée à évacuer l'huile séparée dudit mélange vers l'extérieur du dégazeur, le dégazeur étant caractérisé en ce que l'enceinte et le pignon forment une seule pièce.

De cette façon, on peut arriver à optimiser l'ensemble du dégazeur d'un point de vue massique (il n'y a plus qu'une seule référence à gérer, ce qui permet une prise en compte globale de la masse), et à optimiser la continuité de la veine d'air formée par l'enceinte, permettant une limitation des pertes de charge.

Le dégazeur selon l'invention peut également présenter un ou plusieurs des caractéristiques suivantes, prises seules ou en combinaisons les unes avec les autres :
- le dégazeur peut être réalisé par fabrication additive,
- l'enceinte peut former un coude et peut comprendre deux parties annulaires, une première partie annulaire sensiblement parallèle à l'axe X et une deuxième partie annulaire s'étendant globalement de manière radiale vers l'axe X,
- une structure alvéolaire formant treillis en fabrication additive peut être logé dans l'enceinte ou le coude,
- la structure alvéolaire est de forme évolutive, de manière à faire varier la texture et/ou la porosité de la structure alvéolaire, radialement et/ou axialement,
- la structure peut former une seule pièce avec l'enceinte et le pignon,
- la première sortie peut être mise en communication fluidique avec la cavité interne de l'arbre creux par l'intermédiaire d'un inhibiteur de vortex, l'inhibiteur de vortex étant formé d'une seule pièce avec l'enceinte et le pignon,
- le pignon peut être agencé axialement le long de la paroi et comprendre au moins une ouverture axiale de passage du mélange air/huile, qui est en communication fluidique avec ladite entrée,
- le pignon peut être agencé au niveau de l'entrée de l'enceinte et comprendre au moins une ouverture axiale de passage du mélange air/huile, qui est en communication fluidique avec ladite entrée,
- l'enceinte peut comprendre deux parois annulaires, respectivement interne et externe, définissant entre elles ladite veine et reliées entre elles par une rangée annulaire de cloisons sensiblement radiales qui définissent entre elles des compartiments de dégazage, chaque paroi annulaire ayant en section une forme générale en U et au moins une des parois annulaires étant reliée aux cloisons par un voile annulaire de matière qui présente une rangée annulaire d'échancrures en arc de cercle, chaque échancrure s'étendant entre deux cloisons adjacentes et étant conformée de sorte que ses extrémités soient reliées aux cloisons adjacentes et que sa partie concave soit située en regard d'une paroi annulaire et définisse avec celle-ci un passage de fluide.

La présente invention a également pour objet un procédé de réalisation d'un dégazeur tel que décrit ci-dessus, comprenant une phase de fabrication additive simultanée du pignon et de l'enceinte.

### Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique une coupe axiale d'un dégazeur selon l'état de la technique dans une turbomachine,
- la figure 2a est une vue schématique en coupe axiale d'un dégazeur selon l'état de la technique,
- la figure 2b est une vue schématique en coupe axiale d'un dégazeur selon l'invention,
- les figures 3a et 3b sont des vues schématiques en perspective d'une enceinte de dégazeur selon l'invention, selon deux modes de réalisations différents,
- la figure 3c est une vue schématique en coupe radiale d'une enceinte de dégazeur, selon un troisième mode de réalisation,
- la figure 4 est une vue schématique en coupe axiale d'une variante d'un dégazeur selon l'invention comportant un inhibiteur de vortex,
- la figure 5 est une vue schématique en coupe radiale d'une enceinte de dégazeur selon l'invention comportant un filtre.

### Description détaillée d'un mode de réalisation de l'invention

Sur les figures, les échelles et les proportions ne sont pas strictement respectées et ce, à des fins d'illustration et de clarté.

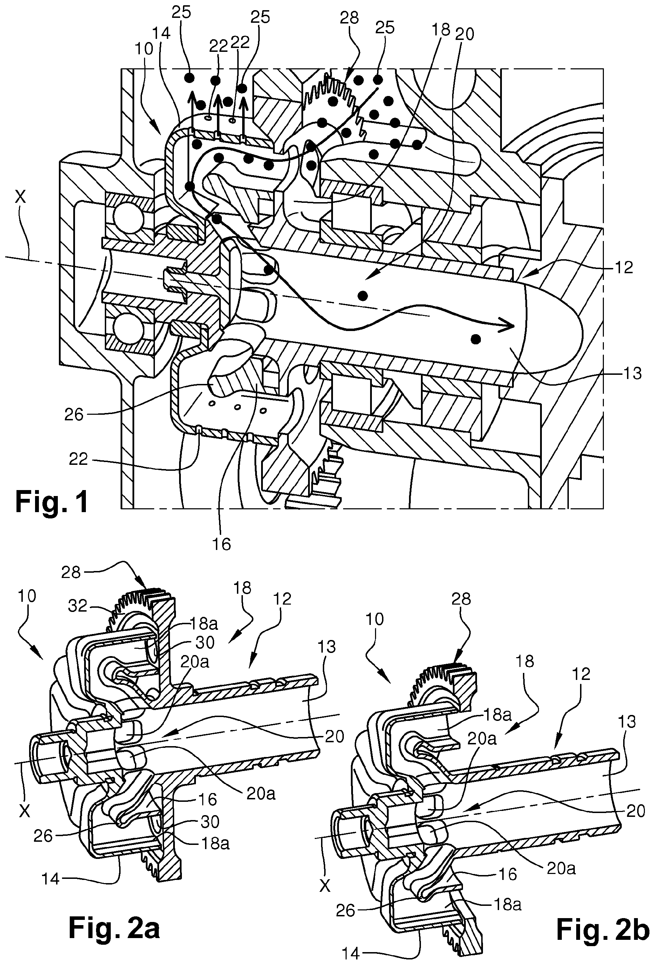

Un dégazeur selon l'invention comprend, tel que représenté sur la figure 1, un ensemble de pièces mobiles en rotation autour d'un axe central de rotation X (qui est, dans ce cas, aussi un axe de symétrie). Parmi ces pièces on trouve une enceinte 10 annulaire de séparation centrifuge d'un mélange air/huile agencée autour d'un arbre creux 12.

L'arbre creux 12 s'étend le long de l'axe X. Il comprend une cavité interne 13, ici sensiblement cylindrique.

L'enceinte annulaire 10 comprend une paroi annulaire externe 14 et une paroi annulaire interne 16. Chaque paroi annulaire 14, 16 présente une section une forme générale en U et l'enceinte 10 comporte ainsi une première partie annulaire P1 qui s'étend essentiellement de manière axiale, en vue de centrifuger le mélange. C'est dans cette première partie P1 que la force centrifuge s'exerce avec le plus de force sur le mélange air/huile. La veine comporte une seconde partie annulaire P2, orientée radialement vers l'axe X, et permettant la jonction avec la cavité 13 de l'arbre creux 12. Les deux parties P1, P2 de la veine forment un coude 26 pouvant former angle droit.

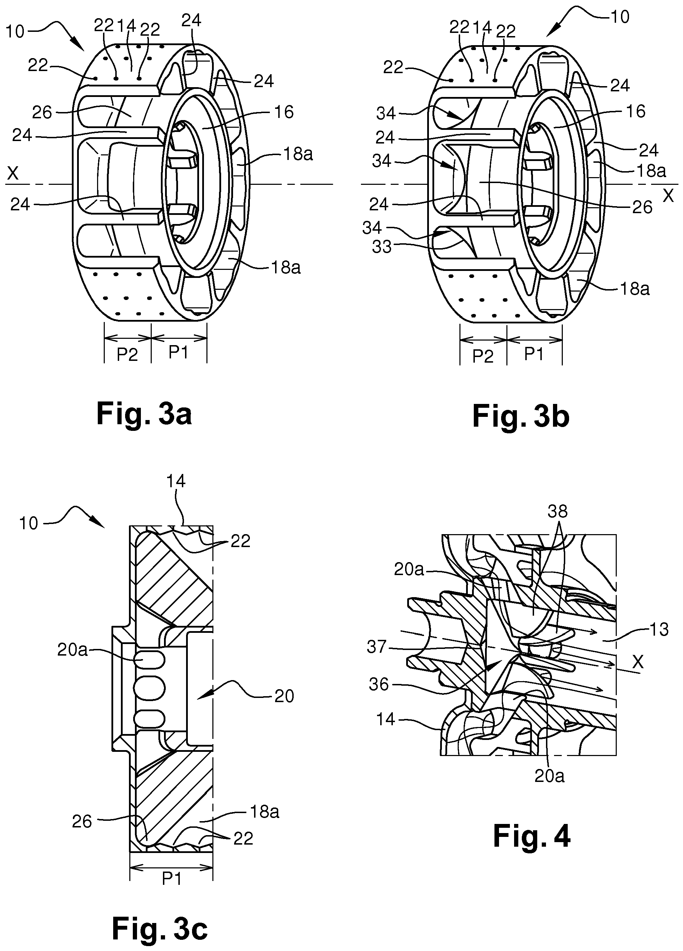

Dans un mode de réalisation représenté en figure 3c, la seconde partie annulaire P2 peut être réduite en longueur, par exemple, réduite à la stricte épaisseur nécessaire à la fabrication de l'enceinte 10.

L'enceinte forme une veine de passage de fluide dont une entrée 18, orientée axialement, permet l'alimentation de l'enceinte avec le mélange air/huile, et dont une première sortie 20, orientée radialement vers l'intérieur, permet la sortie de l'air déshuilé séparée dudit mélange. Cette première sortie 20 est en communication fluidique avec la cavité interne 13 de l'arbre creux 12 et permet ainsi l'évacuation de l'air déshuilé vers l'extérieur du dégazeur, à travers l'arbre creux 12. L'enceinte 10 comporte en outre au moins une seconde sortie d'huile 22, orientée radialement vers l'extérieur, destinée à évacuer l'huile séparée du mélange air/huile vers l'extérieur du dégazeur.

L'enceinte 10 est découpée en une pluralité de compartiments de dégazage répartis circonférentiellement autour de l'axe X. Les compartiments sont séparés les uns des autres par des cloisons radiales 24 reliant les parois 14, 16 entre elles.

Chaque compartiment est délimité :
- radialement par une zone correspondante de la paroi annulaire externe 14 et une zone correspondante de la paroi annulaire interne 16, et
- latéralement par deux cloisons radiales 24 s'étendant entre les deux parois annulaires 14, 16.

La veine de passage de fluide de l'enceinte 10 est ainsi compartimentée ou sectorisée, et chaque compartiment est associé un orifice axial d'entrée 18a de mélange air/huile, une pluralité de sorties radiales d'huile 22, et un orifice radial 20a de sortie d'air déshuilée.

Les sorties radiales externes 22 sont ménagées dans la paroi externe 14 et sont configurées pour pouvoir évacuer l'huile séparée du mélange par l'effet de la force centrifuge du dégazeur.

L'orifice de sortie d'air déshuilée 20a permet de relier chaque compartiment à la cavité interne 13 de l'arbre creux 12 et d'évacuer l'air vers l'extérieur de la turbomachine.

La figure 1 illustre également de manière schématique le déplacement de l'air et des gouttes d'huile 25 passant à travers le dégazeur.

Comme visible sur les figures 2a et 2b, le dégazeur comprend par ailleurs un pignon 28 de mise en rotation de l'arbre creux 12. Le pignon 28 est agencé au niveau de l'entrée 18 du mélange air/huile dans l'enceinte 10 et comprend au moins une ouverture axiale 30 de passage dudit mélange. Cette ouverture axiale 30 est en communication fluidique avec l'entrée 18 afin de permettre l'entrée du mélange air/huile à dégazer à travers le pignon 28.

Notons toutefois que le pignon 28 peut être implanté n'importe où sur le dégazeur. Par exemple, (exemple non représenté) le pignon 28 peut être agencé en arrière du dégazeur. L'intégration du pignon 28 au dégazeur peut dès lors lever certaines limites d'implantation du dégazeur dans la turbomachine, par exemple en ne limitant plus l'espace disponible pour l'implantation de celui-ci entre le pignon 28 et un roulement. Ainsi, le pignon 28 peut être agencé n'importe où, axialement le long de la paroi annulaire 14.

Comme visible sur la figure 2a, un pignon 28 de l'état de la technique comporte un disque 32 dont une périphérie interne est reliée à l'arbre creux 12 et dont une périphérie externe porte une denture annulaire. Le pignon 28 de l'état de la technique est ainsi relié à chacune des deux parois interne 16 et externe 14 de l'enceinte 10 et s'étend donc radialement entre les deux parois interne 16 et externe 14. Chaque entrée d'air radiale 18a doit ainsi être alignée avec une ouverture axiale 30 du disque 32 du pignon 28.

Notons, par ailleurs, que dans la technique antérieure un ensemble « écrou et taraudage » (non représenté) est nécessaire pour lier le dégazeur au pignon 28 et que de nombreux usinages sont réalisés pour ajuster et centrer les pièces les unes par rapport aux autres. Il faut, de plus, gérer plusieurs références.

Sur la figure 2b on constate que le disque 32 du pignon 28 a disparu. En effet, le pignon 28 du dégazeur selon l'invention formant pièce unique avec l'enceinte 10, il n'y a pas besoin de disque 32 en tant que tel pour assurer un contact suffisant entre le pignon 28 et l'enceinte 10. L'obtention d'une pièce unique comportant l'enceinte 10 et le pignon 28 peut être réalisée au moyen d'un procédé de réalisation par fabrication additive connu en soi, tel qu'on peut en trouver un exemple dans le document FR3004370.

Ce qu'on entend par pièce unique est similaire au sens qu'on donne à l'expression « venu de matière » dans le cadre d'une réalisation par moulage : les deux parties formant « pièce unique » sont réalisées en même temps, par exemple par la même étape de fabrication additive, dans la même matière et forment ainsi un ensemble monobloc.

Les gains en masse obtenus par la suppression de l'appui axial dégazeur/pignon sur l'arbre creux 12 et par la suppression du disque 32 sont significatifs. Par ailleurs, le coût de fabrication se trouve réduit car la réalisation de la pièce par fabrication additive ne nécessite pratiquement que la rectification des dentures du pignon 28 et/ou de rectification des portées de roulement sur le pignon 28.

Par ailleurs, la fabrication additive permet d'optimiser la géométrie de la veine d'écoulement, en particulier au niveau de la jonction avec la cavité interne 13 de l'arbre creux 12.

Cependant, la réalisation d'une pièce par fabrication additive peut engendrer des difficultés car la pièce présente le risque de s'effondrer sur elle-même. Il peut être nécessaire d'ajouter des structures de soutien lorsque la pièce présente des zones planes d'une certaine dimension, comme par exemple illustré en figure 3a, au niveau du coude 26 de la paroi interne 16 : On voit que la paroi interne 16 présente une partie sensiblement annulaire qui forme un plateau horizontal (au niveau du coude 26). Lors de la fabrication, ce plateau horizontal peut s'effondrer entre les cloisons radiales 24 qui limitent les compartiments.

Comme indiqué plus haut, chaque paroi annulaire 14, 16 présente une section une forme générale en U et, de manière à pallier le risque d'effondrement, au moins une des parois annulaires 14, 16 est reliée aux cloisons radiales 24 par un voile annulaire de matière 33 qui présente une rangée annulaire d'échancrures 34 en arc de cercle, comme visible sur la figure 3b. Chaque échancrure 34 s'étend ainsi entre deux cloisons radiales 24 adjacentes et est conformée de sorte que ses extrémités soient reliées aux cloisons 24 adjacentes et que sa partie concave soit située en regard d'une paroi annulaire 14, 16. Dans l'exemple illustré sur la figure 3b, la partie concave de chaque échancrure 34 se situe en regard de la paroi externe 14. La partie concave de chaque échancrure 34 définit avec la paroi externe 14 un passage de fluide, de manière à ce que l'air circulant dans la veine passe au contact de l'intrados de l'échancrure 34 dans la deuxième partie P2 de la veine, en aval du coude 26.

Ce voile annulaire de 33 en aval du coude 26 permet en outre de se libérer des contraintes d'usinage dues aux procédés d'usinage classiques et d'être optimisées de manière à améliorer les capacités de déshuilage du mélange air/huile et de minimiser les pertes de charge.

Comme visible sur la figure 4, le dégazeur selon l'invention peut comporter un inhibiteur de vortex 36, logé dans la cavité interne 13 de l'arbre creux 12, au niveau des sorties radiales internes 20a. Ainsi, la sortie 20 de l'enceinte 10 est mise en communication fluidique avec la cavité interne 13 de l'arbre creux 12 par l'intermédiaire de cet inhibiteur de vortex 36.

L'inhibiteur de vortex 36 permet d'éviter une mise en rotation du flux d'air (mise en rotation appelée vortex), menant à des pertes de charge importantes, notamment lors des régimes à grandes vitesses de rotation. Cet inhibiteur de vortex 36 comporte, dans l'exemple illustré, un corps 37 de forme générale conique dont la pointe est orientée vers l'aval et centrée sur l'axe X du dégazeur. Des ailettes 38 s'étendent radialement vers l'extérieur depuis ce cône et forcent le flux d'air pénétrant dans l'arbre creux 12 à s'écouler sensiblement parallèlement à l'axe X. Ces ailettes 38 sont régulièrement réparties autour de l'axe X et s'étendent chacune sensiblement dans un plan radial passant par l'axe X.

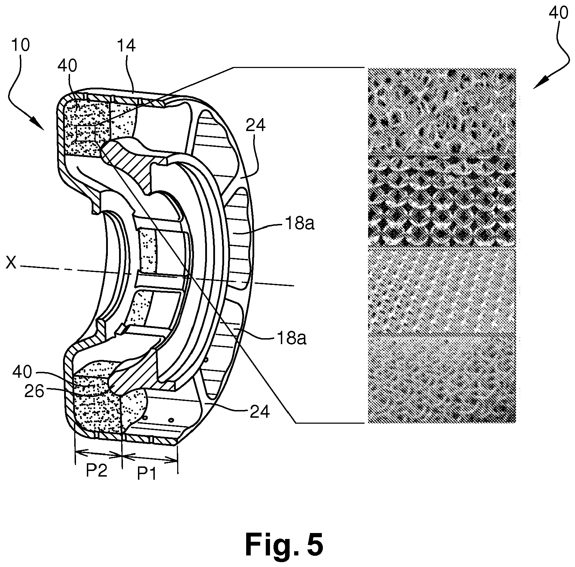

Par ailleurs, selon un mode de réalisation présenté en figure 5, le dégazeur peut comporter une ou plusieurs structures alvéolaires 40 de forme annulaire et de type treillis, destinées à filtrer les plus fines gouttelettes d'huile. Cette structure alvéolaire est réalisée par fabrication additive. Selon le mode de réalisation de la figure 5, l'enceinte 10 comporte au moins une structure alvéolaire 40 dans chaque compartiment, au niveau du coude 26 de la veine. Cette structure alvéolaire permet également de conserver la forme originale des parois annulaires 14, 16 en complément ou en remplacement des échancrures 34 du voile 33 décrit ci-dessus, en référence à la figure 3b.

La structure alvéolaire 40 ne s'étend pas intégralement dans les compartiments de la veine, de manière à former deux espaces distincts successifs dans le compartiment : un espace libre de matériau alvéolaire correspondant à la première partie P1 de la veine en amont du coude 26 et un espace garni de matériau alvéolaire au niveau du coude 26. L'espace libre de matériau alvéolaire est alimenté en mélange par les entrées axiales 18a.

La première partie P1 de la veine présente ainsi une fonction centrifuge simple permettant de réaliser une première phase du déshuilage.

Dans l'exemple de la figure 5, les faces d'entrée et de sortie de la structure alvéolaire 40 sont sensiblement perpendiculaires à la paroi 14. Toutefois, selon un mode de réalisation non représenté, chacune des faces d'entrée et sorties de la structure alvéolaires 40 peut être inclinées d'un angle déterminé en fonction de paramètres choisis par la personne du métier. Cet angle est déterminé soit par les besoins de fabricabilité, soit dans un souci d'optimisation des performances de déshuilage et/ou de pertes de charges.

L'espace garni au niveau du coude 26 (comportant la structure alvéolaire 40) présente une fonction de captage des gouttes d'huile non extraites au cours de la première phase et assure donc une deuxième phase du déshuilage. Cette deuxième phase de déshuilage est réalisée par la structure alvéolaire 40 sans perte de charge notable du fait de l'attaque axiale des gouttes d'huile.

Dans un mode de réalisation non représenté, un espace vide peut être ménagé entre la structure alvéolaire 40 et la face interne de la paroi annulaire 14 (à hauteur du coude 26), de façon à ce que l'huile centrifugée sur cette face interne (résultant de la captation des gouttelettes du mélange air/huile), soit dirigée le plus rapidement possible vers les orifices 22. Ceci permet d'éviter que ces gouttelettes ne soient ré-arrachées par le flux d'air circulant vers la cavité interne 13.

En outre, avec le procédé de fabrication additive, il est possible de choisir la géométrie de la structure alvéolaire 40 de manière à maximiser sa fonction de filtre et, comme illustré en figure 5, faire varier la texture et la porosité de la structure alvéolaire, radialement et/ou axialement. La fabrication additive permet également la fabrication de formes complexes, comme des « entonnoirs » autour de chaque orifices 22. La porosité variable permet d'uniformiser les pertes de charge entre différentes zones de la veine.

La texture de la structure alvéolaire 40 peut également, par exemple, présenter la forme d'entrelacements de fibres réguliers et/ou irréguliers. L'orientation privilégiée par une structure régulière peut être efficace pour guider les gouttelettes vers les sorties radiales externes 22 et éviter l'accumulation d'huile dans les zones radialement externes de la structure alvéolaire 40, qui peut bloquer l'écoulement de l'air.

Dans un mode de réalisation non représenté, il est également possible de faire varier la texture et la porosité en azimut à l'intérieur de chaque compartiment. Comme pour les effets de force centrifuge dans le sens radial, cela permet de prendre en compte les effets d'accumulation d'huile qui peuvent se produire contre les cloisons radiales 24, par exemple.

Ces modes de réalisation permettent d'adapter la structure alvéolaire 40 à la forme de la veine de telle sorte qu'elle maximise le nombre de gouttelettes captées en minimisant les pertes de charge afférentes.

Le procédé de fabrication additive de l'enceinte 10, du pignon 28 et, si présents, de la structure alvéolaire 40 et/ou de l'inhibiteur de vortex 36, a lieu de manière simultanée et permet à la fois obtenir un certain degré de liberté quant aux géométries choisies pour faire circuler le flux d'air et intégrer simplement une structure alvéolaire 40 et/ou un inhibiteur de vortex 36 à même d'augmenter le taux de captage de gouttelettes d'huile et d'améliorer le flux d'air dans la dégazeur. La fabrication additive de l'ensemble peut se faire, de manière connue par un procédé de fusion laser contrôlée d'une poudre métallique.

Ainsi, en passant d'un dégazeur formé par un ensemble de minimum trois références de pièces (le pignon 28, l'enceinte 10, l'écrou), on passe à une seule pièce formant corps unique pouvant intégrer des structures alvéolaires 40 et/ou des inhibiteurs de vortex 36 parfaitement adaptés aux besoins du dégazeur en question. La réalisation par fabrication additive permet de s'approcher au mieux du besoin fonctionnel des composants en optimisant le niveau de performance, en particulier sur la masse de l'ensemble et l'aspect pertes de charges. Il est possible de concevoir toutes sortes de géométries pour les dégazeurs et d'y intégrer d'autres fonctions, telles que, par exemple, des bagues intérieures de roulement.

## Revendications

1. Dégazeur centrifuge d'un mélange air/huile de turbomachine, comprenant un arbre creux (12) s'étendant le long d'un axe X et définissant une cavité interne de circulation d'air (13), un pignon (28) de mise en rotation de l'arbre creux (12), et une enceinte annulaire (10) de séparation centrifuge dudit mélange, l'enceinte (10) étant agencée autour de l'arbre creux (12) et formant une veine de passage de fluide dont une entrée (18) est orientée axialement pour l'alimentation de l'enceinte (10) avec ledit mélange, et dont une première sortie (20) est orientée radialement vers l'intérieur pour la sortie de l'air déshuilé séparé dudit mélange, cette première sortie (20) étant en communication fluidique avec ladite cavité interne (13) de l'arbre creux (12) pour l'évacuation de l'air déshuilé vers l'extérieur du dégazeur, l'enceinte (10) comportant en outre au moins une seconde sortie d'huile (22) orientée radialement vers l'extérieur et destinée à évacuer l'huile séparée dudit mélange vers l'extérieur du dégazeur,
le dégazeur étant **caractérisé en ce que** l'enceinte (10) et le pignon (28) forment une seule pièce.

2. Dégazeur selon la revendication précédente, **caractérisé en ce qu'**il est réalisé par fabrication additive.

3. Dégazeur selon l'une quelconque des revendications précédentes, **caractérisé en ce que** l'enceinte forme un coude (26) et comprend deux parties annulaires, une première partie annulaire (P1) sensiblement parallèle à l'axe X et une deuxième partie annulaire (P2) s'étendant globalement de manière radiale vers l'axe X.

4. Dégazeur selon la revendication précédente, dans laquelle une structure alvéolaire formant treillis (40) en fabrication additive est logée dans l'enceinte ou le coude (26).

5. Dégazeur selon la revendication précédente, **caractérisé en ce que** la structure alvéolaire (40) est de forme évolutive, de manière à faire varier la texture et/ou la porosité de la structure alvéolaire, radialement et/ou axialement.

6. Dégazeur selon l'une quelconque des revendications 4 ou 5, **caractérisé en ce que** la structure alvéolaire (40) forme une seule pièce avec l'enceinte (10) et le pignon (28).

7. Dégazeur selon l'une quelconque des revendications précédentes, **caractérisé en ce que** la première sortie (20) est mise en communication fluidique avec la cavité interne (13) de l'arbre creux (12) par l'intermédiaire d'un inhibiteur de vortex (36), l'inhibiteur de vortex étant formé d'une seule pièce avec l'enceinte (10) et le pignon (28).

8. Dégazeur selon la revendication précédente, **caractérisé en ce que** le pignon (28) est agencé axialement le long de la paroi (14) et comprend au moins une ouverture axiale (30) de passe du mélange air/huile, qui est en communication fluidique avec ladite entrée (18).

9. Dégazeur selon la revendication 7, **caractérisé en ce que** le pignon (28) est agencé au niveau de l'entrée (18) de l'enceinte (10) et comprend au moins une ouverture axiale (30) de passe du mélange air/huile, qui est en communication fluidique avec ladite entrée (18).

10. Dégazeur selon l'une quelconque des revendications 3 à 9, **caractérisé en ce que** l'enceinte (10) comprend deux parois annulaires, respectivement interne (16) et externe (14), définissant entre elles ladite veine et reliées entre elles par une rangée annulaire de cloisons sensiblement radiales (24) qui définissent entre elles des compartiments de dégazage, chaque paroi annulaire (14, 16) ayant en section une forme générale en U et au moins une des parois annulaires (14, 16) étant reliée aux cloisons (24) par un voile annulaire (33) de matière qui présente une rangée annulaire d'échancrures (34) en arc de cercle, chaque échancrure (34) s'étendant entre deux cloisons (24) adjacentes et étant conformée de sorte que ses extrémités soient reliées aux cloisons (24) adjacentes et que sa partie concave soit située en regard d'une paroi annulaire (14, 16) et définisse avec celle-ci un passage de fluide.

11. Procédé de réalisation d'un dégazeur selon l'une quelconque des revendications 1 à 10, comprenant une phase de fabrication additive simultanée du pignon (28) et de l'enceinte (10).

## Patentansprüche

1. Zentrifugalentgaser eines Luft-/Ölgemischs für eine Turbomaschine, umfassend eine Hohlwelle (12), die sich entlang einer Achse X erstreckt und einen inneren Luftzirkulationshohlraum (13) definiert, ein Ritzel (28), um die Hohlwelle (12) in Drehung zu versetzen, und eine ringförmige Einschließung (10) zur zentrifugalen Trennung des Gemischs, wobei die Einschließung (10) um die Hohlwelle (12) herum angeordnet ist und einen Fluiddurchgangsstrom bildet, von dem ein Einlass (18) axial ausgerichtet ist, um die Einschließung (10) mit dem Gemisch zu versorgen, und von dem ein erster Auslass (20) radial nach innen ausgerichtet ist, um die von dem Gemisch getrennte entölte Luft auszulassen, wobei dieser erste Auslass (20) in strömungstechnischer Kommunikation mit dem inneren Hohlraum (13) der Hohlwelle (12) steht, um die entölte Luft zur Außenseite des Entgasers ablassen, wobei die Einschließung (10) weiter mindestens einen zweiten, radial zur Außenseite ausgerichteten Ölauslass (22) aufweist, der radial nach außen ausgerichtet ist und dazu bestimmt ist, das aus dem Gemisch getrennte Öl zur Außenseite des Entgasers abzulassen,
wobei der Entgaser **dadurch gekennzeichnet ist, dass** die Einschließung (10) und das Ritzel (28) einstückig gebildet sind.

2. Entgaser nach dem vorstehenden Anspruch, **dadurch gekennzeichnet, dass** er durch additive Fertigung hergestellt ist.

3. Entgaser nach einem der vorstehenden Ansprüche, **dadurch gekennzeichnet, dass** die Einschließung ein Kniestück (26) bildet und zwei ringförmige Teile umfasst, einen ersten ringförmigen Teil (P1), der im Wesentlichen parallel zur Achse X verläuft, und einen zweiten ringförmigen Teil (P2), der sich insgesamt radial zur Achse X erstreckt.

4. Entgaser nach dem vorstehenden Anspruch, wobei eine additiv gefertigte, ein Geflecht (40) bildende Wabenstruktur in der Einschließung oder dem Kniestück (26) untergebracht ist.

5. Entgaser nach dem vorstehenden Anspruch, **dadurch gekennzeichnet, dass** die Wabenstruktur (40) eine evolutive Form aufweist, sodass die Textur und/oder die Porosität der Wabenstruktur radial und/oder axial variiert werden kann.

6. Entgaser nach einem der Ansprüche 4 oder 5, **dadurch gekennzeichnet, dass** die Wabenstruktur (40) einstückig mit der Einschließung (10) und dem Ritzel (28) gebildet ist.

7. Entgaser nach einem der vorstehenden Ansprüche, **dadurch gekennzeichnet, dass** der erste Auslass (20) über einen Wirbelhemmer (36) in strömungstechnische Kommunikation mit dem inneren Hohlraum (13) der Hohlwelle (12) gebracht wird, wobei der Wirbelhemmer einstückig mit der Einschließung (10) und dem Ritzel (28) gebildet ist.

8. Entgaser nach dem vorstehenden Anspruch, **dadurch gekennzeichnet, dass** das Ritzel (28) axial entlang der Wand (14) angeordnet ist und mindestens eine axiale Öffnung (30) zum Durchlassen des Luft-/Ölgemischs umfasst, die in strömungstechnischer Kommunikation mit dem Einlass (18) steht.

9. Entgaser nach Anspruch 7, **dadurch gekennzeichnet, dass** das Ritzel (28) im Bereich des Einlasses (18) der Einschließung (10) angeordnet ist und mindestens eine axiale Öffnung (30) zum Durchlassen des Luft-/Ölgemischs umfasst, die in strömungstechnischer Kommunikation mit dem Einlass (18) steht.

10. Entgaser nach einem der Ansprüche 3 bis 9, **dadurch gekennzeichnet, dass** die Einschließung (10) zwei ringförmige Wände umfasst, jeweils eine innere (16) und eine äußere (14), die zwischen sich den Strom definieren und durch eine ringförmige Reihe von im Wesentlichen radialen Trennwänden (24) miteinander verbunden sind, die zwischen sich Entgasungskammern definieren, wobei jede ringförmige Wand (14, 16) im Querschnitt eine allgemeine U-Form hat und mindestens eine der ringförmigen Wände (14, 16) mit den Trennwänden (24) durch einen ringförmigen Kranz (33) aus Material verbunden ist, das eine ringförmige Reihe von kreisbogenförmigen Aussparungen (34) aufweist, wobei sich jede Aussparung (34) zwischen zwei benachbarten Trennwänden (24) erstreckt und so geformt ist, dass ihre Enden mit den benachbarten Trennwänden (24) verbunden sind und dass ihr konkaver Teil gegenüber einer ringförmigen Wand (14, 16) angeordnet ist und mit dieser einen Fluiddurchgang definiert.

11. Verfahren zur Herstellung eines Entgasers nach einem der Ansprüche 1 bis 10, umfassend eine Phase der gleichzeitigen additiven Herstellung des Ritzels (28) und der Einschließung (10).

## Claims

1. A centrifugal degasser of an air/oil mixture of a turbomachine, comprising a hollow shaft (12) extending along an axis X and defining an internal air circulation cavity (13), a pinion (28) for rotating the hollow shaft (12), and an annular chamber (10) for centrifugal separation of said mixture, the chamber (10) being arranged around the hollow shaft (12) and forming a fluid passage vein, an inlet (18) of which is oriented axially for feeding the chamber (10) with said mixture, and a first outlet (20) of which is oriented radially inwards for the exit of the de-oiled air separated from said mixture, this first outlet (20) being in fluid communication with said internal cavity (13) of the hollow shaft (12) for discharging the de-oiled air to the outside of the degasser, the chamber (10) further comprising at least one second oil outlet (22) oriented radially outwards and intended for discharging the oil separated from said mixture to the outside of the degasser,
the degasser being **characterised in that** the chamber (10) and the pinion (28) form a single piece.

2. The degasser according to the preceding claim, **characterised in that** it is made by additive manufacture.

3. The degasser according to any one of the preceding claims, **characterised in that** the chamber forms a bend (26) and comprises two annular parts, a first annular part (P1) substantially parallel to the axis X and a second annular part (P2) extending generally radially towards the axis X.

4. The degasser according to the preceding claim, in which a lattice-like honeycomb structure (40) in additive manufacture is housed in the chamber or bend (26).

5. The degasser according to the preceding claim, **characterised in that** the honeycomb structure (40) has an evolving shape, so as to vary the texture and/or the porosity of the honeycomb structure, radially and/or axially.

6. The degasser according to any one of claims 4 or 5, **characterised in that** the honeycomb structure (40) forms a single piece with the chamber (10) and the pinion (28).

7. The degasser according to any one of the preceding claims, **characterised in that** the first outlet (20) is placed in fluid communication with the internal cavity (13) of the hollow shaft (12) by means of a vortex inhibitor (36), the vortex inhibitor being formed in one piece with the chamber (10) and the pinion (28).

8. The degasser according to the preceding claim, **characterised in that** the pinion (28) is arranged axially along the wall (14) and comprises at least one axial opening (30) for the passage of the air/oil mixture which is in fluid communication with said inlet (18).

9. The degasser according to claim 7, **characterised in that** the pinion (28) is arranged at the inlet (18) of the chamber (10) and comprises at least one axial opening (30) for the passage of the air/oil mixture, which is in fluid communication with said inlet (18).

10. The degasser according to any one of claims 3 to 9, **characterised in that** the chamber (10) comprises two annular walls, respectively inner (16) and outer (14), defining between them said vein and connected together by an annular row of substantially radial partitions (24) which define between them degassing compartments, each annular wall (14, 16) being generally U-shaped in cross-section and at least one of the annular walls (14, 16) being connected to the partitions (24) by an annular web (33) of material which has an annular row of notches (34) in the shape of an arc of a circle, each notches (34) extending between two adjacent partitions (24) and being shaped so that its ends are connected to the adjacent partitions (24) and its concave portion is located opposite an annular wall (14, 16) and defines a fluid passage therewith.

11. A method of producing a degasser according to any one of claims 1 to 10, comprising a phase of simultaneous additive manufacture of the pinion (28) and the chamber (10).
